(19) Europäisches Patentamt
European Patent Office
Office européen des brevets

(11) **EP 3 740 734 B1**

(12) **EUROPÄISCHE PATENTSCHRIFT**

(45) Veröffentlichungstag und Bekanntmachung des Hinweises auf die Patenterteilung:
**26.01.2022 Patentblatt 2022/04**

(21) Anmeldenummer: **18840020.4**

(22) Anmeldetag: **19.12.2018**

(51) Internationale Patentklassifikation (IPC):
*G01B 3/56* *(2006.01)*     *B21D 5/00* *(2006.01)*
*G01B 5/02* *(2006.01)*     *B21D 5/02* *(2006.01)*

(52) Gemeinsame Patentklassifikation (CPC):
**G01B 3/566; B21D 5/0263; G01B 5/02**

(86) Internationale Anmeldenummer:
**PCT/AT2018/060310**

(87) Internationale Veröffentlichungsnummer:
**WO 2019/119010 (27.06.2019 Gazette 2019/26)**

(54) **BESTIMMUNG DER BIEGEVERKÜRZUNG EINES ZU BIEGENDEN BLECHWERKSTÜCKES**

DETERMINING THE BEND DEDUCTION OF A SHEET METAL WORKPIECE TO BE BENT

DÉTERMINER LA RÉDUCTION DE CINTRAGE D'UNE PIÈCE EN TÔLE À CINTRER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017 AT 510812017**

(43) Veröffentlichungstag der Anmeldung:
**25.11.2020 Patentblatt 2020/48**

(73) Patentinhaber: **TRUMPF Maschinen Austria GmbH & Co. KG.**
**4061 Pasching (AT)**

(72) Erfinder: **KNEIDINGER, Harald**
**4063 Hörsching (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
DE-A1- 19 936 839     DE-T5-112012 000 792
US-A- 5 689 435     US-A1- 2010 106 463
US-A1- 2017 336 187

**EP 3 740 734 B1**

**Beschreibung**

Die Erfindung betrifft ein Verfahren zum Abschätzen einer Verkürzungslänge eines um n Biegeachsen und um n Biegewinkel alpha gebogenen Blechwerkstückes, wobei eine Messanordnung mit einer ersten Messelementoberfläche eines ersten Messelements und mit einer zweiten Messelementoberfläche eines zweiten Messelements verwendet wird, und wobei die Messelemente durch Teile einer Biegemaschine gebildet sind und die erste und die zweite Messelementoberfläche in einem Winkel von 90° relativ zueinander angeordnet sind, und wobei das gebogene Blechwerkstück n+1 sich entlang einer Erstreckungsgeraden erstreckende Schenkel und n durch die Biegung des Blechwerkstückes hergestellte und sich zwischen zwei benachbarten Schenkeln erstreckende Krümmungsbereiche umfasst.

Der Buchstabe n steht hierbei für eine natürliche Zahl; es gilt n=1,2,3,4....

Eine Schwierigkeit beim Biegen eines Blechstreifens um eine Biegeachse besteht darin, die Ursprungslänge des Blechstreifens so zu wählen, dass der gebogene Blechstreifen definierte Abmessungen aufweist. Während des Vorganges des Biegens kommt es nach der gängigen Lehre in Abhängigkeit des zu biegenden Werkstückes an der Innenseite des Krümmungsbereiches zu Stauchungen, während der Werkstoff an der Außenseite des Krümmungsbereiches einer Streckung unterworfen ist. Das Ausmaß des Stauchens und des Streckens des Werkstückes an der Innenseite beziehungsweise an der Außenseite der Krümmung ist aufgrund der Vielzahl der Einflussfaktoren sehr schwer vorhersagbar.

Es wird in DE112012000792 ein Verfahren zur Bestimmung der Ausgangsabmessungen eines Blechwerkstückes vor dem Biegen zu einer Blechkonstruktion vorgeschlagen, welches Verfahren auf der Bestimmung einer Länge H3 und der Bestimmung von Winkeln basiert. Betrachtet man das gebogene Werkstück als ein Dreieck, so entspricht die Länge H3 im Wesentlichen der Höhe des Dreieckes.

Das erfindungsgemäße Verfahren unterscheidet sich von dem in DE112012000792 offenbarten Verfahren, dass es ohne die Bestimmung der Länge H3 und ohne das Bestimmen der Winkel und sohin in einer einfacheren Weise durchführbar ist.

EP1398094 betrifft ein Verfahren zur Bestimmung der Schenkellänge eines Biegeteils in einer Biegevorrichtung. Es findet sich in EP1398094 kein Hinweis auf die Ermittlung der Verkürzungslängen wie dies Teil des erfindungsgemäßen Verfahrens ist. EP1398094 ist insbesondere auf die Bestimmung nur einer Schenkellänge beschränkt.

EP2683504 beschreibt ein Verfahren zur dynamischen Korrektur eines Biegewinkels eines Blechmaterials auf einer Plattenbiegevorrichtung. Das darin beschriebene Verfahren beruht unter anderem auf der Bestimmung des nominalen Biegewinkels und des Abstandes des Biegestempels von dem gebogenen Blech, nachdem der Biegestempel in eine zurückgezogene Position gebracht wurde. Das im Folgenden beschriebene Verfahren kommt ohne die Bestimmung dieser Parameter aus.

DE10009074 betrifft ein Verfahren zum Frei- oder Schwenkbiegen eines Werkstückes sowie eine Vorrichtung zur Ermittlung der Lage eines Werkstückschenkels beim Biegen. Es findet sich in DE10009074 kein Hinweis auf die Bestimmung der Längen und Abstände und die Errechnung der Verkürzungen wie im erfindungsgemäßen Verfahren beschrieben.

Es ist in DE10163956 ein Verfahren und eine Vorrichtung zum Messen von Längen an einem durch Biegen verformten Werkstück erfasst. Es findet sich in DE10163956 kein Hinweis auf die Errechnung der Verkürzungen wie im erfindungsgemäßen Verfahren beschrieben.

US 2010/106463 A1 beschreibt Computerprogramme zur Volumenmodellierung bei der Herstellung von Teilen durch Biegen von Blech und dabei benutzte mathemaische Beziehungen. Es wird darin auch eine Gleichung unter Einbeziehung der Blechverkürzung ("Bend Deduktion LDB") bzw. eine Gleichung unter Einbeziehung der Blechkompensation ("Bend Compensation V") offenbart.

In dem Dokument US 5 689 435 A werden Systeme zur automatisierten Konstruktion von Halterungen aus Blech für Gasturbinenmotoren beschrieben.

Das Dokument DE 199 36 839 A1 beschreibt eine Längenmeßeinrichtung zum Messen einer Länge, ausgehend von einem virtuellen Schnittpunkt von Verlängerungslinien von zwei Oberflächen eines gebogenen Elements, das durch Biegen einer Platte hergestellt wird.

Die Verfahren nach dem Stand der Technik sind im Allgemeinen nicht einfach durchzuführen. Es ist Aufgabe der vorliegenden Erfindung, die Nachteile der Verfahren nach dem Stand der Technik zur Bestimmung der zufolge einer Biegung um eine Biegeachse stattfindenden Verkürzung eines Blechwerkstückes zu überwinden.

Die im Folgenden diskutierte Erfindung stellt sich insbesondere die Aufgabe, die beim Biegen eines Blechwerkstückes auftretende Verkürzung in einem möglichst einfachen Verfahren mit einer möglichst hohen Genauigkeit im Sinne einer Abschätzung bestimmen zu können. Mit Hilfe des erfindungsgemäßen Verfahrens soll es insbesondere einfach sein, Veränderungen im Biegeverhalten von einer Vielzahl von zu biegenden Blechwerkstücken, insbesondere das Verhalten von einer Vielzahl von zu biegenden Blechwerksstücken in Hinblick auf die stattfindende Verkürzung festzustellen.

Diese Aufgabe wird durch ein Verfahren gemäß den Ansprüchen gelöst.

Das erfindungsgemäße Verfahren ist vor allem, jedoch nicht einschränkend auf Blechwerkstücke mit einer über die Erstreckungsfläche des Blechwerkstückes gleichbleibenden Dicke gerichtet. Dies schließt nicht aus, dass die Dicke beispielsweise im Bereich der durch die einschlägigen Normen festgelegten Grenzen variieren kann.

Das erfindungsgemäße Verfahren ist vor allem auf gebogene Blechwerkstücke gerichtet, welche durch ein Gesenkbiegewerkzeug durch Kaltbiegen hergestellt werden. Die gebogenen Blechwerkstücke können durch Beachtung der DIN6935 hergestellt werden.

Das Abschätzen der Verkürzung zufolge Biegung eines Blechwerkstückes um eine Biegeachse kann durch das Bestimmen einer Tangentenverkürzung erfolgen, welches Verfahren zur Tangentenverkürzung die folgenden Schritte umfasst:

- Bestimmen der Ursprungslänge L0 des Blechstreifens vor dem Biegen des Blechwerkstückes,
- Biegen des Blechwerkstückes und Anlegen des gebogenen Blechwerkstücks mit seiner äußeren Oberfläche an die Messelementoberflächen,
- Bestimmen des Schnittpunktes / der Schnittpunkte von Erstreckungsgeraden benachbarter Schenkel oder von zu den Erstreckungsgeraden parallelen Geraden, welche Geraden an den der jeweiligen Biegeachse abgewandten Oberflächen der Schenkel verlaufen,
- Bestimmen der Abstände A1, A2 zwischen dem Schnittpunkt / den Schnittpunkten und den freien Enden der Schenkel und Bestimmen der n-1 Abstände $B_j$ zwischen den Schnittpunkten,
- wobei die freien Enden der Schenkel unter Anwendung einer berührungslosen Messmethode vermessen werden,
- Bestimmen einer Tangentenverkürzung T gemäß der Formel:

$$T = L0 - \sum_{i=1}^{2} A_i \ldots n = 1$$

$$T = L0 - \sum_{i=1}^{2} A_i - B_1 \ldots n = 2$$

$$T = L0 - \sum_{i=1}^{2} A_i - \sum_{j=1}^{n-1} B_j \ldots n \geq 3$$

Ein Blechwerkstück mit n=1 Biegeachsen umfasst zwei Schenkel und einen sich zwischen den Schenkeln erstreckenden Krümmungsbereich. Es sind sohin nur Abstände A1 und A2 bestimmbar.

Ein Blechwerkstück mit n=2 Biegeachsen umfasst drei Schenkel und zwei sich zwischen zwei benachbarten Schenkeln erstreckende Krümmungsbereiche. Es sind sohin zwei Abstände A1, A2 und ein Abstand B1 bestimmbar.

Die Anzahl der bestimmbaren Abstände A und die Anzahl der bestimmbaren Abstände B sind durch die geometrischen Gegebenheiten vorgegeben.

Das Abschätzen der Verkürzung zufolge Biegung eines Blechwerkstückes um eine Biegeachse kann durch das Bestimmen einer Kantenverkürzung erfolgen, welches Verfahren zur Kantenverkürzung die folgenden Schritte umfasst:

- Bestimmen der Ursprungslänge L0 des Blechstreifens vor dem Biegen des Blechwerkstückes,
- Biegen des Blechwerkstückes und Anlegen des gebogenen Blechwerkstücks mit seiner äußeren Oberfläche an die Messelementoberflächen,
- Bestimmen von Kantenlängen $C_1$, $C_2$ des gebogenen Blechwerkstücks, welche Kantenlängen $C_1$, $C_2$ jeweils einen parallel zu der Erstreckungsgeraden des Schenkels zu messenden Abstand von einem freien Ende eines Schenkels bis zu einem Tangentenpunkt angeben, in welchem Tangentenpunkt eine normal zu der ersten Erstreckungsgeraden stehende Tangente den Krümmungsbereich tangiert,
- Bestimmen von n-1 Kantenlängen $D_1$ des gebogenen Blechwerkstückes, welche Kantenlängen $D_1$ einen parallel zu der Erstreckungsgeraden des Schenkels zu messenden Abstand von einem Tangentenpunkt zu einem weiteren Tangentenpunkt angeben, in welchen Tangentenpunkten normal zu der Erstreckungsgeraden stehende Tangenten den Krümmungsbereich tangieren,
- wobei die freien Enden der Schenkel unter Anwendung einer berührungslosen Messmethode vermessen werden,
- Errechnen der Kantenverkürzungslänge K gemäß der nachstehenden Formel:

$$K = L0 - \sum_{i=1}^{2} C_i \ldots n = 1$$

$$K = L0 - \sum_{i=1}^{2} C_i - D_1 \dots n = 2$$

$$K = L0 - \sum_{k=1}^{2} C_k - \sum_{l=1}^{n-1} D_l \dots n \geq 3$$

Ein Blechwerkstück mit n=1 Biegeachsen umfasst zwei Schenkel und einen sich zwischen den Schenkeln erstreckenden Krümmungsbereich. Es sind sohin nur Abstände C1 und C2 bestimmbar.

Ein Blechwerkstück mit n=2 Biegeachsen umfasst drei Schenkel und zwei sich zwischen zwei benachbarten Schenkeln erstreckende Krümmungsbereiche. Es sind sohin zwei Abstände C1, C2 und ein Abstand D1 bestimmbar.

Die Anzahl der bestimmbaren Abstände C und die Anzahl der bestimmbaren Abstände D sind durch die geometrischen Gegebenheiten vorgegeben.

Es kann auch eine Vorrichtung zum Bestimmen einer Kantenverkürzungslänge eines Blechwerkstückes vorgesehen sein, welche Vorrichtung eine erste Messelementoberfläche und eine zweite Messelementoberfläche umfasst, wobei die erste Messelementoberfläche und die zweite Messelementoberfläche in einem rechten Winkel zueinander stehen.

Die Messelementoberflächen sind so ausgebildet, dass die Oberflächen der Schenkel des Blechwerkstückes an die Messelementoberflächen anlegbar sind und die Kantenlängen des Blechwerkstückes durch Bestimmen eines Abstandes des freien Endes des Blechwerkstückes von dem Schnittpunkt der Messelementoberflächen bestimmbar sind.

Eine derartige Vorrichtung kann berührende Messvorrichtungen und/oder berührungslose Messvorrichtungen zur Bestimmung des Abstandes des freien Endes vom Schnittpunkt der Messelementoberflächen umfassen.

Die zweite Messelementoberfläche, mit welcher zweiten Messelementoberfläche der Schenkel mit der zu bestimmenden Kantenlänge in Kontakt gebracht wird, kann eine Länge L2 kleiner als die zu bestimmende Kantenlänge C aufweisen. Diese Ausbildung erlaubt es, die Kantenlänge C durch ein Überstandmaß zu bestimmen.

Zum besseren Verständnis der Erfindung wird diese anhand der nachfolgenden Figuren näher erläutert.

Es zeigen jeweils in stark vereinfachter, schematischer Darstellung:

Fig. 1    die geometrischen Verhältnisse eines um eine Biegeachse gebogenen Blechwerkstückes aufweisend einen Biegewinkel alpha<90° zur Bestimmung der Kantenverkürzung;

Fig. 2    die geometrischen Verhältnisse eines um eine Biegeachse gebogenen Blechwerkstückes aufweisend einen Biegewinkel 90<alpha<180° zur Bestimmung der Kantenverkürzung;

Fig. 3    die geometrischen Verhältnisse eines um zwei Biegeachsen gebogenen Blechwerkstückes aufweisend Biegewinkel 90<alpha<180° zur Bestimmung der Kantenverkürzung;

Fig. 4    die geometrischen Verhältnisse eines um eine Biegeachse gebogenen Blechwerkstückes aufweisend einen Biegewinkel alpha<90° zur Bestimmung der Tangentenverkürzung;

Fig. 5    eine Messvorrichtung zur Bestimmung der Tangentenverkürzung;

Fig. 6    die geometrischen Verhältnisse eines um zwei Biegeachsen gebogenen Blechwerkstückes aufweisend zwei Biegewinkel alpha <90° zur Bestimmung der Tangentenverkürzung;

Fig. 7    Möglichkeiten zur Bestimmung der Tangentenverkürzung;

Fig. 8    die Bestimmung der Tangentenverkürzung eines mehrfach gebogenen Blechwerkstückes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Es sind aus Übersichtlichkeitsgründen nicht in allen Figuren sämtliche Elemente mit Bezugszeichen versehen.

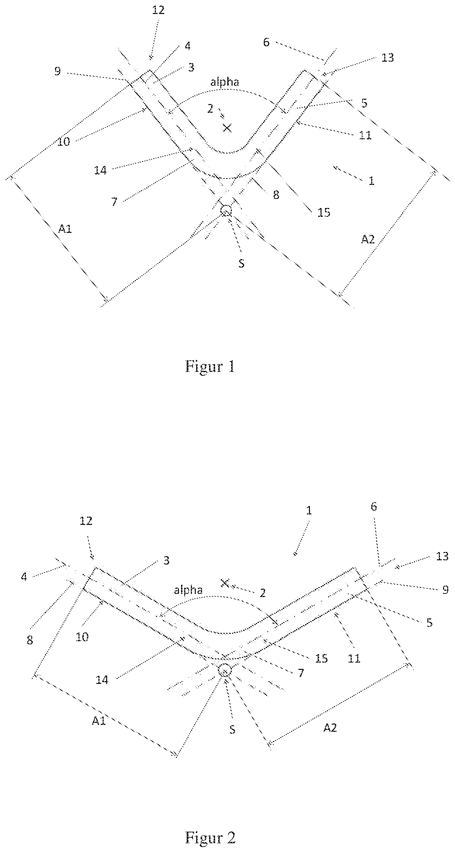

Figur 1 und Figur 2 veranschaulichen die zu bestimmenden Längen und Abstände an einem Blechwerkstück 1, welches Blechwerkstück 1 um eine Biegeachse 2 um einen Biegewinkel alpha gebogen wurde. Die in der Figurenbeschreibung zu Figur 1 und Figur 2 erläuterte Bestimmung der Tangentenverkürzung T als ein erfindungsgemäßes Verfahren zur Abschätzung einer bei einem Biegen eines Blechwerkstückes um eine normal zur Bildebene der Figur 1 und der Figur 2 orientierte Biegeachse 2 auftretenden Verkürzung ist für alle Biegewinkel alpha<180° möglich. Figur 1 zeigt ein um eine Biegeachse 2 gebogenes Blechwerkstück 1 mit einem Biegewinkel alpha<90° und Figur 1 ein um eine Biegeachse 2 gebogenes Blechwerkstück 1 mit einem Biegewinkel 90°<alpha< 180°.

Die in Figur 1 und Figur 2 dargestellten Blechwerkstücke 1 umfassen jeweils eine Biegeachse 2, sodass n=1 gilt.

Die jeweils in Figur 1 und Figur 2 dargestellten gebogenen Biegewerkstücke 1 umfassen jeweils einen ersten Schenkel 3, welcher erster Schenkel 3 sich entlang einer ersten Erstreckungsgeraden 4 erstreckt, einen zweiten Schenkel 5, welcher zweiter Schenkel 5 sich entlang einer zweiten Erstreckungsgeraden 6 erstreckt, und einen sich zwischen dem ersten Schenkel 3 und dem zweiten Schenkel 5 erstreckenden Krümmungsbereich 7. Der jeweilige Übergang zwischen den Schenkeln 3, 4 und dem Krümmungsbereich 7 ist geometrisch durch die Erstreckung der Schenkel 3, 4 und die polygonale Erstreckung des Krümmungsbereiches 7 definiert, wobei der erste Übergangspunkt 14 zwischen dem ersten Schenkel 3 und dem Krümmungsbereich 7 sowie der zweite Übergangspunkt 15 zwischen dem zweiten Schenkel 5 und dem Krümmungsbereich 7 nur schwer am Blechwerkstück 1 bestimmbar ist.

Der Krümmungsbereich 6 weist eine polygonale Form auf, wobei der erste Schenkel 3 beziehungsweise die erste Erstreckungsgerade 4 und der zweite Schenkel 5 beziehungsweise die zweite Erstreckungsgerade 5 jeweils tangential zu den Endpunkten des Krümmungsbereiches 7 sind.

Der Fachmann ist in der Lage, die Ursprungslänge L0 des in keiner Figur dargestellten Blechwerkstückes vor dem Biegen des Blechwerkstückes 1 um die Biegeachse 2 mit Messmethoden nach dem Stand der Technik zu bestimmen. Die Ursprungslänge L0 ist als jene Länge definiert, welche Länge zwischen den freien Enden 12, 13 des Blechwerkstückes 1 messbar ist.

Der Fachmann bestimmt den durch einen Kreis zusätzlich markierten Schnittpunkt S zwischen einer ersten Geraden 8 und einer zweiten Geraden 9, wobei die erste Gerade 8 und die zweite Gerade 9 parallele Geraden zu der ersten Erstreckungsgeraden 4 beziehungsweise zu der zweiten Erstreckungsgeraden 6 sind. Die erste Gerade 8 ist die zu der ersten Erstreckungsgeraden 4 parallele Gerade, welche erste Gerade 8 eine Tangente zu der äußeren ersten Oberfläche 10 des ersten Schenkels 3 ist. Die zweite Gerade 9 ist die zu der zweiten Erstreckungsgeraden 6 parallele Gerade, welcher zweite Gerade 9 eine Tangente zu der äußeren zweiten Oberfläche 11 des zweiten Schenkels 5 ist.

Der Schnittpunkt S kann in der Weise bestimmt werden, dass ein erstes Messelement an die äußere erste Oberfläche 10 und ein zweites Messelement an die äußere zweite Oberfläche 11 angelegt wird. Die an die äußeren Oberflächen angelegten Messelemente erstrecken sich mit der an die Oberflächen angelegten Kanten deckungsgleich mit der ersten Gerade 8 beziehungsweise mit der zweiten Gerade.

Nach der Bestimmung des Schnittpunktes S ist der Fachmann in der Lage, die in der Figur 1 eingetragenen Längen A1 und A2 zu bestimmen. Die Länge A1 ist definitionsgemäß die zwischen dem freien ersten Ende 12 des ersten Schenkels 3 und dem Schnittpunkt S gemessene Länge. Die Länge A2 ist definitionsgemäß die zwischen dem freien zweiten Ende 13 des zweiten Schenkels 5 gemessene Länge.

Der Fachmann bestimmt die Tangentenverkürzung T aus der gemessenen Ursprungslänge L0 des Blechwerkstückes, mit Hilfe der Länge A1 und der Länge A2 gemäß der Formel T=L0-A1-A2.

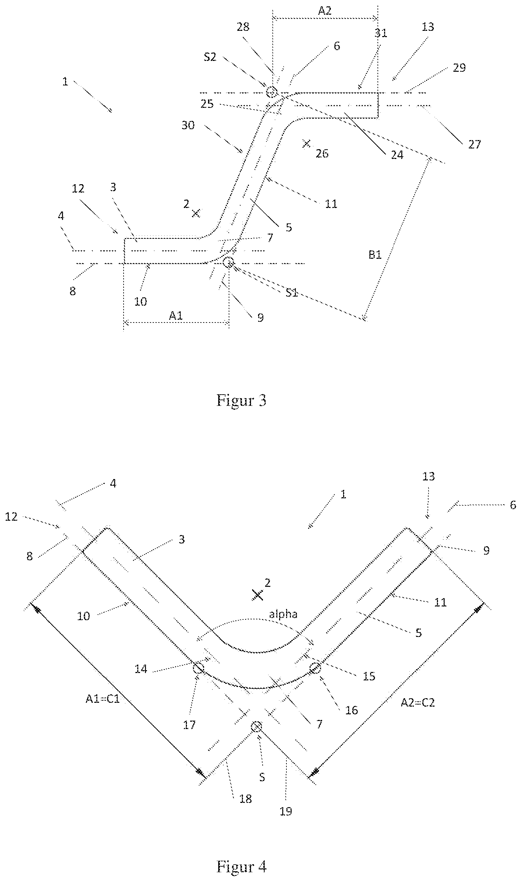

Das erfindungsgemäße Verfahren zur Abschätzung der Verkürzung eines Blechwerkstückes ist auch auf ein gebogenes Blechwerkstück umfassend n Schenkeln anwendbar. Figur 3 veranschaulicht eine Anwendung des erfindungsgemäßen Verfahrens auf ein Blechwerkstück 1 umfassend einen ersten Schenkel 3, einen zweiten Schenkel 5, einen dritten Schenkel 24. Es erstreckt sich zwischen dem ersten Schenkel 3 und dem zweiten Schenkel 5 ein erster Krümmungsbereich 7 sowie zwischen dem zweiten Schenkel 5 und dem dritten Schenkel 24 ein zweiter Krümmungsbereich 25. Der erste Krümmungsbereich 7 wird durch Biegen des Blechwerkstückes 1 um eine erste Biegeachse 2 und der zweite Krümmungsbereich 25 durch Biegen des Blechwerkstückes 1 um eine zweite Biegeachse 26 hergestellt. Figur 3 betrifft den Sonderfall, dass das Blechwerkstück 1 bei der Biegung um die erste Biegeachse 2 und bei der Biegung um die zweite Biegeachse 26 jeweils um einen Biegewinkel alpha gebogen wurde.

Der erste Schenkel 3 erstreckt sich entlang einer ersten Erstreckungsgeraden 4; der zweite Schenkel 5 und der dritte Schenkel 24 erstrecken sich entlang einer zweiten Erstreckungsgeraden 6 beziehungsweise entlang einer dritten Erstreckungsgeraden 27.

Der Fachmann ermittelt den ersten Schnittpunkt S1 als einen Schnittpunkt der ersten Geraden 8 und der zweiten Geraden 9. Die Schnittpunkte S1 und S2 sind in Figur 3 durch einen Kreis zusätzlich markiert. Die erste Gerade 8 erstreckt sich in der ersten Oberfläche 10 des ersten Schenkels 3, welche erste Oberfläche 10 von der ersten Biegeachse 2 abgewandt ist, und parallel zu der ersten Erstreckungsgeraden 4. Die zweite Gerade 9 verläuft in der zweiten Oberfläche 11 des zweiten Schenkels 5, welche zweite Oberfläche 11 von der ersten Biegeachse 2 abgewandt ist, und parallel zu der zweiten Erstreckungsgeraden.

Es wird weiters der Schnittpunkt S2 als ein Schnittpunkt der dritten Geraden 28 und der vierten Geraden 29 ermittelt. Die dritte Gerade 28 erstreckt sich in der der zweiten Biegeachse 26 abgewandten dritten Oberfläche 30 des zweiten Schenkels 5 und parallel zu der zweiten Erstreckungsachs 6. Die vierte Gerade 29 verläuft in der vierten Oberfläche 31 des dritten Schenkels 24, welche vierte Oberfläche 31 die von der zweiten Biegeachse 26 abgewandte Oberfläche des dritten Schenkels 24 ist, und parallel zu der dritten Erstreckungsgeraden 27.

Der Fachmann ermittelt abschließend den Abstand A1 als den Abstand zwischen dem ersten freien Ende 12 des Blechwerkstückes 1 und dem ersten Schnittpunkt S1, den Abstand A2 als den Abstand zwischen dem zweiten Ende 13 des Blechwerkstückes 1 und dem zweiten Schnittpunkt S2 und den Abstand B1 zwischen den Schnittpunkten S1 und S2. Die erwähnten Abstände werden parallel zu der ersten Erstreckungsgeraden 3 beziehungsweise zu der zweiten Erstreckungsgeraden 6 beziehungsweise zu der dritten Erstreckungsgeraden 27 gemessen. Der Abstand A1 ist zu der ersten Erstreckungslinie 4, der Abstand A2 ist zu der dritten Erstreckungslinie 27 und der Abstand B1 ist zu der zweiten Erstreckungslinie 6 parallel.

Der Fachmann errechnet die durch die Offenbarung der Erfindung definierte Tangentenverkürzung durch $T=L0-A1-A2-B1$.

Figur 4 veranschaulicht die zu bestimmenden Längen und Abstände an einem Blechwerkstück 1, welches Blechwerkstück 1 um eine Biegeachse 2 um einen Biegewinkel alpha gebogen wurde, um die Kantenverkürzung K zu bestimmen, welche Kantenverkürzung nach dem Biegen eines Blechwerkstückes um eine Biegeachse 2 und um einen Biegewinkel alpha kleinergleich 90° bestimmbar ist.

Der Fachmann ist in der Lage, die Ursprungslänge L0 des in keiner Figur dargestellten unverformten Blechwerkstückes 1 zu messen. Die Ursprungslänge L0 ist die zwischen den freien Enden 12, 13 des unverformten Blechstückes 1 messbare Länge.

Das um eine normal auf die Bildebene der Figur 4 orientiere Biegeachse 2 gebogene Blechwerkstück 1 umfasst einen ersten Schenkel 3, welcher erste Schenkel sich entlang einer ersten Erstreckungsgeraden 4 erstreckt, einen sich entlang einer zweiten Erstreckungsgeraden 6 erstreckenden zweiten Schenkel 5 und einen sich zwischen den Schenkeln 3, 4 erstreckenden polygonalen Krümmungsbereich 7. Die Erstreckungsgeraden 4, 5 bilden die Tangenten zum Krümmungsbereich 7.

Die Erstreckungsgeraden 4, 5 kontaktieren den Krümmungsbereich 7 an einem ersten Übergangspunkt 14 beziehungsweise einem zweiten Übergangspunkt 15, welche Übergangspunkte 14, 15 geometrisch eindeutig definiert sind, jedoch am gebogenen Blechwerkstück 1 nur schwer feststellbar sind.

Der Fachmann ermittelt den ersten Tangentenpunkt 16, an welchem ersten Tangentenpunkt 16 eine normal auf die erste Erstreckungsgerade 4 stehende Gerade eine erste Tangente 18 auf den Krümmungsbereich 7 ausbildet. Es ist weiters der zweite Tangentenpunkt 17 ermittelbar, an welchem zweiten Tangentenpunkt 17 eine normal auf die zweite Erstreckungsgerade 6 stehende Gerade eine zweite Tangente 19 auf den Krümmungsbereich 7 ausbildet. Die Tangentenpunkte 16, 17 sind durch Kreise zusätzlich markiert.

Es ist eine erste Kantenlänge C1 am gebogenen Blechwerkstück messbar, welche erste Kantenlänge C1 als der zu der ersten Erstreckungsgeraden 4 parallele Abstand zwischen den dem ersten freien Ende 12 und dem ersten Tangentenpunkt 16 definiert ist. In hierzu analoger Weise ist eine zweite Kantenlänge C2 am gebogenen Blechwerkstück 1 bestimmbar, welche zweite Kantenlänge C2 als der parallel zu der zweiten Erstreckungsgeraden 6 zu messende Abstand zwischen dem zweiten freien Ende 13 und zweiten Tangentenpunkt 17 messbar ist.

Die erste Kantenlänge C1 ist beispielsweise in einer sehr einfach durchzuführenden Art und Weise mittels einer Schiebelehre messbar. Es werden hierzu die Innenkanten der Außenmessschenkel für äußere Abmessungen von Objekten an das erste freie Ende 12 und an die Außenoberfläche der Krümmung 7 und die den Außenschenkel zugewandte Kante der Stange der Schiebelehre an die erste Oberfläche 10 angelegt. Durch das Anlegen der Kante der Stange der Schiebelehre an die erste Oberfläche wird der erste Tangentenpunkt 16 ermittelt und die erste Kantenlänge C1 gemessen.

In hierzu analoger Weise wird der zweite Kantenlänge C2 durch Anlegen der Innenkanten der Außenmessschenkel an das zweite freie Ende 13 und an die Außenoberfläche der Krümmung 7 sowie der den Außenmessschenkel zugewandten Kante der Stange der Schiebelehre an die erste Oberfläche 11 bestimmt.

Abschließend ist der Fachmann in der Lage, die durch die Biegung des Blechwerkstückes 1 um die Biegeachse 2 und um einen Winkel alpha<90° auftretende Verkürzung des Blechwerkstückes 1 mittels Berechnung der Kantenverkürzung abzuschätzen. Die Kantenverkürzung kann anhand der Formel $K=L0-C1-C2$ berechnet werden.

Figur 4 veranschaulicht den Sonderfall eines Biegewinkels alpha=90°. In Analogie zu den obigen Figurenbeschreibungen zu Figur 1 bis Figur 3 ist der Fachmann in der Lage, den Schnittpunkt S als einen Schnittpunkt der ersten Geraden 8 und der zweiten Geraden 9 zu bestimmen. Es sind hierbei die oben hinreichend genau erläuterten Konstruktionsvorgänge anzuwenden. Der Schnittpunkt S ist in Figur 4 zusätzlich durch einen Kreis markiert. Der Abstand A1 und der Abstand A2 sind ebenso analog zu der obigen Beschreibung zu ermitteln, wobei der Fachmann erkennt, dass bei dem in Figur 4 gezeigten Sonderfall eines Biegewinkels alpha=90° A1=C1 und A2=C2 gilt. Es gilt weites für den Sonderfall alpha=90° $L0-C1-C2=K=T=L0-A1-A2$.

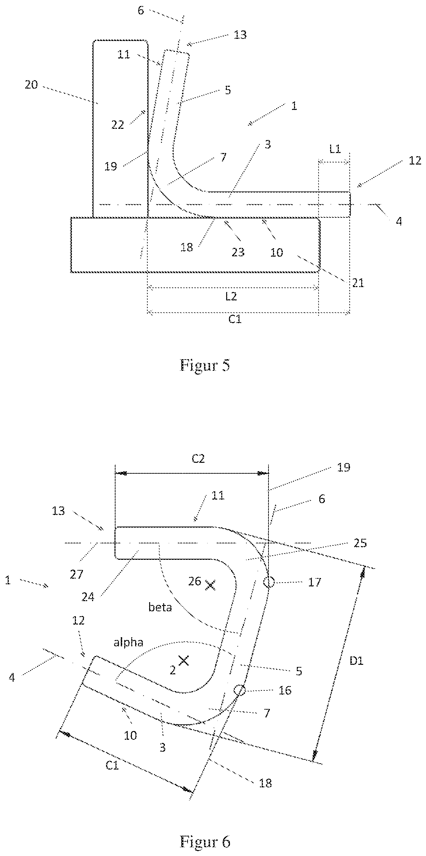

Figur 5 veranschaulicht eine weitere Methode zur Bestimmung der Kantenlängen C1, C2 an einem gebogenen Blechwerkstück 1 aufweisend einen Biegewinkel alpha kleinergleich 90°. Die Messanordnung umfasst ein erstes Messelement 20 und ein zweites Messelement 21 aufweisend eine erste Messelementoberfläche 22 beziehungsweise eine zweite Messelementoberfläche 23. Die Messelementoberflächen 22, 23 sind in einem Winkel von 90° zueinander angeordnet. Die zweite Messelementoberfläche 23 weist eine bekannte Länge L2 auf.

Die Messelemente 20, 21 sind Teil einer Biegemaschine.

Es wird das gebogene Blechwerkstück 1 mit seiner äußeren Oberfläche an die Messoberflächen 22, 23 angelegt. Zur Bestimmung der ersten Kantenlänge C1 kontaktiert die erste Oberfläche 10 die zweite Messelementoberfläche 23 und die Außenoberfläche des Krümmungsbereiches 7 die erste Messelementoberfläche 22.

Figur 5 zeigt ein Blechwerkstück 1 aufweisend einen Biegewinkel alpha gleich 80°. Die erste Messelementoberfläche 22 kontaktiert die Außenoberfläche des Krümmungsbereiches 7 die erste Messelementoberfläche 22.

Nachdem die Länge L2 bekannt ist, ist der Fachmann in der Lage, die erste Kantenlänge C1 durch Bestimmen des Überstandmaßes L1 zu bestimmen. Das Maß L1 kann beispielsweise durch kontaktlose Messmethoden bestimmt werden.

Zum Bestimmen der zweiten Kantenlänge C2 legt der Fachmann das gebogene Blechwerkstück 1 mit der zweiten Oberfläche 11 an die zweite Messelementoberfläche 23 und mit der Außenoberfläche des Krümmungsbereiches 7 an der ersten Messelementoberfläche 22 an, um so wiederum über das Messen des Überstandmaßes L1 die zweite Kantenlänge B zu bestimmen. Der Vorgang des Bestimmens der zweiten Kantenlänge C2 ist in Figur 5 nicht dargestellt.

Figur 6 veranschaulicht das Verfahren zur Abschätzung der Verkürzung eines um zwei Biegeachsen 2, 26 gebogenen Blechwerkstückes 1 umfassend einen ersten Biegewinkel alpha kleinergleich 90° und einen zweiten Biegewinkel kleinergleich 90°.

Das Blechwerkstück 1 umfasst einen ersten Schenkel 3, einen zweiten Schenkel 5 und einen dritten Schenkel 24, welche Schenkel 3, 5, 24 sich entlang von Erstreckungsgeraden 4, 6, 27 erstrecken. Der erste Schenkel 3 und der zweite Schenkel 5 sind durch den ersten Krümmungsbereich 7 getrennt. Der zweite Schenkel 5 und der dritte Schenkel 25 sind durch den zweiten Krümmungsbereich 25 getrennt.

Zum Messen der ersten Kantenlänge C1 legt der Fachmann die Kante der Stange einer Schiebelehre (in Figur 6 nicht dargestellt) an die erste Oberfläche 10 des ersten Schenkels 3 an, welche erste Oberfläche 10 die von der ersten Biegeachse 2 abgewandte Oberfläche des ersten Schenkels 3 ist. Der Fachmann legt weiter die Innenkante eines Außenmessschenkels am ersten freien Ende 12 und eine Innenkante des anderen Außenmessschenkels am ersten Krümmungsbereich 7 an. Durch das Anlegen der Stange an der ersten Oberfläche 10 kontaktiert die Innenkante des anderen Außenmessschenkels den ersten Krümmungsbereich 7 am ersten Tangentenpunkt 16.

Die Bestimmung der zweiten Kantenlänge C2 erfolgt hierzu analog, wobei die Kante der Stange der Schiebelehre (in Figur 6 nicht dargestellt) an der zweiten Oberfläche 11 des dritten Schenkels 24 angelegt wird. Die Innenkanten der Außenmessschenkel kontaktieren wiederum das zweite freie Ende 13 des Blechwerkstückes 1 und den zweiten Tangentenpunkt 17.

Zur Bestimmung der Kantenlänge D1 wird die Kante der Stange der Schiebelehre (in Figur 6 nicht dargestellt) an der dritten Oberfläche 30 des zweiten Schenkels 5 und die Innenkanten der Außenmessschenkel an den ersten Krümmungsbereich 7 und an den zweiten Krümmungsbereich 25 angelegt.

Der Fachmann berechnet die Kantenverkürzung des Blechwerkstückes 1 zufolge einer Biegung des Blechwerkstückes 1 um die erste Biegeachse 2 und um die zweite Biegeachse 26 durch die Formel K=L0-C1-C2-D1.

In der Figurenbeschreibung zu Figur 6 ist die Konstruktion der Tangenten et cetera nicht derart detailliert beschrieben wie in den obigen Figurenbeschreibungen, um auch durch die schriftliche Beschreibung zu verdeutlichen, wie einfach das erfindungsgemäße Verfahren durchführbar ist.

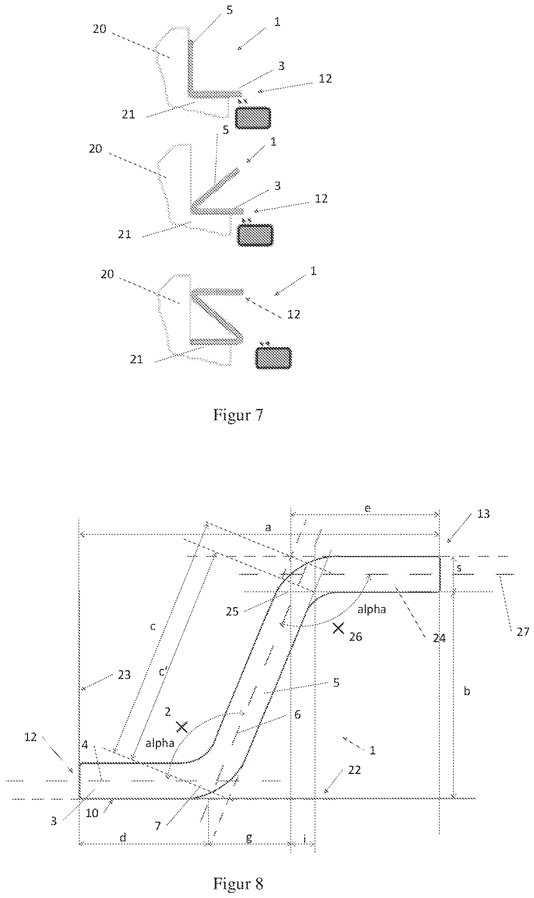

Figur 7 veranschaulicht in Ergänzung zu Figur 5, wie die zufolge einer Biegung verkürzten Blechwerkstücke 1 mit bespielhaft gezeigten Formen unter Anwendung des erfindungsgemäßen Verfahrens vermessen werden können, sodass die Verkürzung abgeschätzt werden kann. Es wird - wie in der obigen Figurenbeschreibung zu Figur 5 eingehend erläutert - das gebogene Blechwerkstück 1 in die durch das erste Messelement 20 und das zweite Messelement 21 gebildete Messvorrichtung eingelegt, sodass das Blechwerkstück 1 die Messvorrichtung kontaktiert und ein freies Ende 12 vermessen kann.

Bei den in Figur 7 dargestellten Blechwerkstücken 1 wird die jeweils die Tangentenverkürzung ermittelt.

Anhand von Figur 8 wird erläutert, wie durch Vermessen des freien Endes die Verkürzung eines um eine erste Biegeachse 2 und um eine zweiten Biegeachse 26 gebogenen Blechwerkstückes 1 durch Anwendung des erfindungsgemäßen Verfahrens abgeschätzt wird. Das Blechwerkstück 1 umfasst wiederum einen sich entlang einer ersten Erstreckungsgeraden 4 erstreckenden ersten Schenkel 3, einen sich entlang einer zweiten Erstreckungsgeraden 6 erstreckenden zweiten Schenkel 5 und einen sich entlang einer dritten Erstreckungsgeraden 27 erstreckenden dritten Schenkel 24. Das Blechwerkstück 1 umfasst einen sich zwischen dem ersten Schenkel 3 und dem zweiten Schenkel 5 erstreckenden ersten Krümmungsbereich 7 und einen sich zwischen dem zweiten Schenkel 5 und dem dritten Schenkel 24 erstreckenden zweiten Krümmungsbereich 25. Der erste Krümmungsbereich 7 und der zweite Krümmungsbereich 25 wird durch Biegen des Blechwerkstückes 1 um eine erste Biegeachse 2 beziehungsweise um eine zweite Biegeachse 26 um jeweils einen Biegewinkel alpha hergestellt. Das in Figur 8 gezeigte gebogene Blechwerkstück 1 weist sohin zwei gleiche Biegewinkel auf.

Das gebogene Blechwerkstück 1 wird zum Vermessen in eine erste Messelementoberfläche 22 und eine zweite Messelementoberfläche 23 umfassende Messvorrichtung mit seinem ersten Ende 12 eingebracht. Es sind in Figur 8 aus Übersichtlichkeitsgründen nur die Messelementoberflächen 22, 23 dargestellt, welche zueinander in einem rechten Winkel angeordnet sind .

Das Blechwerkstück 1 kontaktiert mit seinem ersten Ende 12 die zweite Messelementoberfläche 23 und mit seiner ersten Oberfläche 10 die erste Messelementoberfläche 22, wodurch das Blechwerkstück 1 auch zu der Messvorrichtung ausgerichtet ist.

Unter Anwendung vom berührungslosen und/oder berührenden Messmethoden nach dem Stand der Technik wird das zweite Ende 13 des Blechwerkstückes 1 vermessen, wobei insbesondere der Abstand a und der Abstand b zu der ersten Messelementoberfläche 22 beziehungsweise zu der zweiten Messelementoberfläche 23 bestimmt wird.

Der Fachmann kennt sohin den Abstand a und den Abstand b sowie den Biegewinkel alpha sowie die Blechdicke s.

Es gilt sohin aufgrund der geometrischen Beziehungen, welche der Fachmann aus der Figur 8 ablesen kann:

$$c' = \frac{b}{sin(\alpha)}$$

$$c = c' + h$$

$$h = s \cdot tan\left(\frac{\alpha}{2}\right)$$

$$c = \frac{b}{sin(\alpha)} + s \cdot tan\left(\frac{\alpha}{2}\right)$$

$$g' = \frac{b}{tan(\alpha)} - s \cdot tan\left(\frac{\alpha}{2}\right)$$

$$g = \frac{b}{tan(\alpha)} - s \cdot tan\left(\frac{\alpha}{2}\right)$$

$$a - g = d + e$$

$$T = L0 - (c + d + e)$$

$$T = L0 - (c + a - g)$$

$$T = L0 - \left(\frac{b}{sin(\alpha)} + s \cdot tan\left(\frac{\alpha}{2}\right) + a - \frac{b}{tan(\alpha)} - s \cdot tan\left(\frac{\alpha}{2}\right)\right)$$

$$T = L0 - \left(\frac{b}{sin(\alpha)} \cdot \left(1 - cos(\alpha)\right) + 2 \cdot s \cdot tan\left(\frac{\alpha}{2}\right) + a\right)$$

Die Ausführungsbeispiele zeigen mögliche Ausführungsvarianten der erfindungsgemäßen Verfahren, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Der Fachmann muss hierzu nicht erfinderisch tätig werden.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Verfahren zu Bestimmung von Abständen können auch durch weitere Verfahren nach dem Stand der Technik und/oder durch Anwendung der gängigen Lehre ergänzt oder ersetzt werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Blechwerkstück | 31 | Vierte Oberfläche |
| 2 | (erste) Biegeachse | S | Schnittpunkt |
| 3 | Erster Schenkel | $A_i$ | Abstand |
| 4 | Erste Erstreckungsgerade | $B_j$ | Abstand |
| 5 | Zweiter Schenkel | $C_k$ | Abstand |
| 6 | Zweite Erstreckungsgerade | $D_1$ | Abstand |
| 7 | Erster Krümmungsbereich | | |
| 8 | Erste Gerade | | |
| 9 | Zweite Gerade | | |
| 10 | Erste Oberfläche | | |
| 11 | Zweite Oberfläche | | |
| 12 | Erstes Ende | | |
| 13 | Zweites Ende | | |
| 14 | Erster Übergangspunkt | | |
| 15 | Zweiter Übergangspunkt | | |
| 16 | Erster Tangentenpunkt | | |
| 17 | Zweiter Tangentenpunkt | | |
| 18 | Erste Tangente | | |
| 19 | Zweite Tangente | | |
| 20 | Erstes Messelement | | |
| 21 | Zweites Messelement | | |
| 22 | Erste Messelementoberfläche | | |
| 23 | Zweite Messelementoberfläche | | |
| 24 | Dritter Schenkel | | |
| 25 | Zweiter Krümmungsbereich | | |
| 26 | Zweite Biegeachse | | |
| 27 | Dritte Erstreckungsachse | | |
| 28 | Dritte Gerade | | |
| 29 | Vierte Gerade | | |
| 30 | Dritte Oberfläche | | |

**Patentansprüche**

1. Verfahren zum Abschätzen einer Verkürzungslänge eines um n Biegeachsen und um n Biegewinkel alpha gebogenen Blechwerkstückes,

   - wobei eine Messanordnung mit einer ersten Messelementoberfläche (22) eines ersten Messelements (20) und mit einer zweiten Messelementoberfläche (23) eines zweiten Messelements (21) verwendet wird,
   - und wobei die Messelemente (20, 21) durch Teile einer Biegemaschine gebildet sind und die erste und die zweite Messelementoberfläche (22, 23) in einem Winkel von 90° relativ zueinander angeordnet sind,

- und wobei das gebogene Blechwerkstück n+1 sich entlang einer Erstreckungsgeraden erstreckende Schenkel und n durch die Biegung des Blechwerkstückes hergestellte und sich zwischen zwei benachbarten Schenkeln erstreckende Krümmungsbereiche umfasst, **gekennzeichnet durch** die folgenden Verfahrensschritte:
- Bestimmen der Ursprungslänge L0 des Blechstreifens vor dem Biegen des Blechwerkstückes,
- Biegen des Blechwerkstückes und Anlegen des gebogenen Blechwerkstücks mit seiner äußeren Oberfläche an die Messelementoberflächen (22, 23),
- Bestimmen des Schnittpunktes / der Schnittpunkte von Erstreckungsgeraden benachbarter Schenkel oder von zu den Erstreckungsgeraden parallelen Geraden, welche Geraden an den der jeweiligen Biegeachse abgewandten Oberflächen der Schenkel verlaufen,
- Bestimmen der Abstände A1, A2 zwischen dem Schnittpunkt / den Schnittpunkten und den freien Enden (12, 13) der Schenkel und Bestimmen der n -1 Abstände Bj zwischen den Schnittpunkten,
- wobei die freien Enden (12, 13) der Schenkel unter Anwendung einer berührungslosen Messmethode vermessen werden,
- Bestimmen einer Tangentenverkürzung T gemäß der Formel:

$$T = L0 - \sum_{i=1}^{2} A_i \dots n = 1$$

$$T = L0 - \sum_{i=1}^{2} A_i - B_1 \dots n = 2$$

$$T = L0 - \sum_{i=1}^{2} A_i - \sum_{j=1}^{n-1} B_j \dots n \geq 3$$

2. Verfahren zum Abschätzen einer Verkürzungslänge eines um n Biegeachsen und um n Biegewinkel, mit einem Biegewinkel alpha < 90°, gebogenen Blechwerkstückes,

- wobei eine Messanordnung mit einer ersten Messelementoberfläche (22) eines ersten Messelements (20) und mit einer zweiten Messelementoberfläche (23) eines zweiten Messelements (21) verwendet wird,
- und wobei die Messelemente (20, 21) durch Teile einer Biegemaschine gebildet sind und die erste und die zweite Messelementoberfläche (22, 23) in einem Winkel von 90° relativ zueinander angeordnet sind,
- und wobei das gebogene Blechwerkstück zumindest n+1 sich entlang von Erstreckungsgeraden erstreckende Schenkel und n durch die Biegung des Blechwerkstückes hergestellte und sich zwischen benachbarte Schenkeln erstreckende Krümmungsbereiche umfasst, **gekennzeichnet durch** die folgenden Verfahrensschritte:
- Bestimmen der Ursprungslänge L0 des Blechstreifens vor dem Biegen des Blechwerkstückes,
- Biegen des Blechwerkstückes und Anlegen des gebogenen Blechwerkstücks mit seiner äußeren Oberfläche an die Messelementoberflächen (22, 23),
- Bestimmen von Kantenlängen $C_1$, $C_2$ des gebogenen Blechwerkstücks, welche Kantenlängen $C_1$, $C_2$ jeweils einen parallel zu der Erstreckungsgeraden des Schenkels zu messenden Abstand von einem freien Ende (12, 13) eines Schenkels bis zu einem Tangentenpunkt angeben, in welchem Tangentenpunkt eine normal zu der ersten Erstreckungsgeraden stehende Tangente den Krümmungsbereich tangiert,
- Bestimmen von n-1 Kantenlängen $D_1$ des gebogenen Blechwerkstückes, welche Kantenlängen $D_1$ einen parallel zu der Erstreckungsgeraden des Schenkels zu messenden Abstand vom Tangentenpunkt zu einem weiteren Tangentenpunkt angeben, in welchen Tangentenpunkten normal zu der Erstreckungsgeraden stehende Tangenten den Krümmungsbereich tangieren,
- wobei die freien Enden (12, 13) der Schenkel unter Anwendung einer berührungslosen Messmethode vermessen werden,
- Errechnen der Kantenverkürzungslänge K gemäß der nachstehenden Formel:

$$K = L0 - \sum_{i=1}^{2} C_i \dots n = 1$$

$$K = L0 - \sum_{i=1}^{2} C_i - D_1 \dots n = 2$$

$$K = L0 - \sum_{k=1}^{2} C_k - \sum_{l=1}^{n-1} D_l \dots n \geq 3$$

**Claims**

1. A method for estimating a shortening length of a sheet metal workpiece which is bent about n bending axes and by n bending angles alpha,

 - wherein a measuring arrangement with a first measuring element surface (22) of a first measuring element (20) and with a second measuring element surface (23) of a second measuring element (21) is used,
 - and wherein the measuring elements (20, 21) are formed by parts of the bending machine and the first and the second measuring element surfaces (22, 23) are arranged at an angle of 90° relative to one another,
 - and wherein the bent sheet metal workpiece comprises n+1 limbs extending along a straight extension line and n curved regions which are produced by bending the sheet metal workpiece and extend between two adjacent limbs, **characterized by** the following method steps:
 - determining the original length L0 of the sheet metal strip prior to bending of the sheet metal workpiece,
 - bending the sheet metal workpiece and placing the bent sheet metal workpiece against the measuring element surfaces (22, 23) with its outer surface,
 - determining the intersection/the intersections of straight extension lines of adjacent limbs or of straight lines parallel to the straight extension lines, said straight lines running at the surfaces of the limbs facing away from the respective bending axis,
 - determining the distances A1, A2 between the intersection/the intersections and the free ends (12, 13) of the limbs and determining the n -1 distances Bj between the intersections,
 - wherein the free ends (12, 13) of the limbs are measured using a contactless measuring method,
 - determining a tangent shortening T according to the formula:

$$T = L0 - \sum_{i=1}^{2} A_i \,_{\ldots}\, n = 1$$

$$T = L0 - \sum_{i=1}^{2} A_i - B_1 \,_{\ldots}\, n = 2$$

$$T = L0 - \sum_{i=1}^{2} A_i - \sum_{j=1}^{n-1} B_j \,_{\ldots}\, n \geq 3$$

2. A method for estimating a shortening length of a sheet metal workpiece which is bent about n bending axes and by n bending angles, with a bending angle alpha<90°,

 - wherein a measuring arrangement with a first measuring element surface (22) of a first measuring element (20) and with a second measuring element surface (23) of a second measuring element (21) is used,
 - and wherein the measuring elements (20, 21) are formed by parts of the bending machine and the first and the second measuring element surfaces (22, 23) are arranged at an angle of 90° relative to one another,
 - and wherein the bent sheet metal workpiece comprises at least n+1 limbs extending along a straight extension lines and n curved regions which are produced by bending the sheet metal workpiece and extend between adjacent limbs, **characterized by** the following method steps:
 - determining the original length L0 of the sheet metal strip prior to bending of the sheet metal workpiece,
 - bending the sheet metal workpiece and placing the bent sheet metal workpiece against the measuring element surfaces (22, 23) with its outer surface,
 - determining edge lengths $C_1$, $C_2$ of the bent sheet metal workpiece, said edge lengths $C_1$, $C_2$ each indicating a distance from a free end (12, 13) of a limb to a tangent point to be measured in parallel to the straight extension line of the limb, at which tangent point a tangent normal to the first straight extension line is tangent to the curved region,
 - determining n-1 edge lengths $D_1$ of the bent sheet metal workpiece, said edge lengths $D_1$ indicating a distance from the tangent point to a further tangent point to be measured in parallel to the straight extension line of the limb, at which tangent points tangents normal to the straight extension lines are tangent to the curved region,
 - wherein the free ends (12, 13) of the limbs are measured using a contactless measuring method,
 - calculating the edge shortening length K according to the following formula:

$$K = L0 - \sum_{i=1}^{2} C_i \,_{\ldots}\, n = 1$$

$$K = L0 - \sum_{i=1}^{2} C_i - D_1 \ldots n = 2$$

$$K = L0 - \sum_{k=1}^{2} C_k - \sum_{l=1}^{n-1} D_l \ldots n \geq 3$$

**Revendications**

1. Procédé permettant d'évaluer une longueur de raccourcissement d'une pièce en tôle cintrée autour de n axes de ceintrage et selon n angles de cintrage alpha,

   - un dispositif de mesure avec une première surface d'élément de mesure (22) d'un premier élément de mesure (20) et avec une deuxième surface d'élément de mesure (23) d'un deuxième élément de mesure (21) étant utilisé,
   - et les éléments de mesure (20, 21) étant formés par des parties d'une machine de cintrage, et la première et la deuxième surface d'élément de mesure (22, 23) étant disposées en formant un angle de 90° l'une avec l'autre ;
   - et la pièce en tôle cintrée comprenant n+1 branches s'étendant le long d'une droite d'extension et n zones de courbure produites par le cintrage de la pièce en tôle et s'étendant entre deux branches voisines, **caractérisé par** les étapes de procédé suivantes :
   - définition de la longueur initiale L0 de la bande de tôle avant le cintrage de la pièce en tôle,
   - cintrage de la pièce en tôle et pose de la pièce en tôle cintrée avec sa surface extérieure contre les surfaces d'élément de mesure (22, 23),
   - définition du point d'intersection / des points d'intersection de droites d'extension de branches voisines ou de droites parallèles aux droites d'extension, lesquelles droites sont situées sur les surfaces de branches qui sont éloignées de l'axe de cintrage respectif,
   - définition des distances A1, A2 entre le point d'intersection / les points d'intersection et les extrémités libres (12, 13) des branches, et définition des n-1 distances Bj entre les points d'intersection,
   - les extrémités libres (12, 13) des branches étant mesurées par l'utilisation d'une méthode de mesure sans contact,
   - définition d'un raccourcissement tangentiel T selon la formule :

$$T = L0 - \sum_{i=1}^{2} A_i \ldots n = 1$$

$$T = L0 - \sum_{i=1}^{2} A_i - B_1 \ldots n = 2$$

$$T = L0 - \sum_{i=1}^{2} A_i - \sum_{j=1}^{n-1} B_j \ldots n \geq 3$$

2. Procédé permettant d'évaluer une longueur de raccourcissement d'une pièce en tôle cintrée autour de n axes de ceintrage et selon n angles de cintrage, avec un angle de cintrage alpha < 90°,

   - un dispositif de mesure avec une première surface d'élément de mesure (22) d'un premier élément de mesure (20) et avec une deuxième surface d'élément de mesure (23) d'un deuxième élément de mesure (21) étant utilisé,
   - et les éléments de mesure (20, 21) étant formés par des parties d'une machine de cintrage, et la première et la deuxième surface d'élément de mesure (22, 23) étant disposées en formant un angle de 90° l'une avec l'autre ;
   - et la pièce en tôle cintrée comprenant au moins n+1 branches s'étendant le long de droites d'extension et n zones de courbure produites par le cintrage de la pièce en tôle et s'étendant entre deux branches voisines, **caractérisé par** les étapes de procédé suivantes :
   - définition de la longueur initiale L0 de la bande de tôle avant le cintrage de la pièce en tôle,
   - cintrage de la pièce en tôle et pose de la pièce en tôle cintrée avec sa surface extérieure contre les surfaces d'élément de mesure (22, 23),
   - définition de longueurs d'arête $C_1$, $C_2$ de la pièce en tôle cintrée, lesquelles longueurs d'arête $C_1$, $C_2$ indiquent respectivement une distance, à mesurer parallèlement à la droite d'extension de la branche, à partir d'une extrémité libre (12, 13) d'une branche jusqu'à un point tangentiel, point tangentiel au niveau duquel une tangente perpendiculaire à la première droite d'extension est tangente à la zone de courbure,
   - définition de n-1 longueurs d'arête $D_1$ de la pièce en tôle cintrée, lesquelles longueurs d'arête $D_1$ indiquent

une distance, à mesurer parallèlement à la droite d'extension de la branche, à partir du point tangentiel vers un autre point tangentiel, points tangentiels au niveau desquels des tangentes perpendiculaires à la droite d'extension sont tangentes à la zone de courbure,

- les extrémités libres (12, 13) des branches étant mesurées par l'utilisation d'une méthode de mesure sans contact,

- calcul de la longueur de raccourcissement d'arête K selon la formule ci-dessous :

$$K = L0 - \sum_{i=1}^{2} C_i \ldots n = 1$$

$$K = L0 - \sum_{i=1}^{2} C_i - D_1 \ldots n = 2$$

$$K = L0 - \sum_{k=1}^{2} C_k - \sum_{l=1}^{n-1} D_l \ldots n \geq 3$$

Figur 1

Figur 2

Figur 3

Figur 4

Figur 5

Figur 6

Figur 7

Figur 8

**IN DER BESCHREIBUNG AUFGEFÜHRTE DOKUMENTE**

**In der Beschreibung aufgeführte Patentdokumente**

- DE 112012000792
- EP 1398094 A
- EP 2683504 A
- DE 10009074
- DE 10163956
- US 2010106463 A1
- US 5689435 A
- DE 19936839 A1